# EUROPEAN PATENT APPLICATION

(11) **EP 4 641 371 A1**
(43) Date of publication of application: **29.10.2025**
(21) Application number: 23915613.6
(22) Date of filing: 26.09.2023
(51) Int. Cl.: G06F 8/70

(54) **CODE MANAGEMENT METHOD AND RELATED SYSTEM**

(30) Priority: 13.01.2023 CN 202310063932; 31.03.2023 CN 202310354090
(71) Applicant: Huawei Cloud Computing Technologies Co., Ltd., Guiyang, Guizhou 550025 (CN)
(72) Inventor: LI, Fei, Guiyang, Guizhou 550025 (CN); ZOU, Daizhu, Guiyang, Guizhou 550025 (CN); LIN, Qiang, Guiyang, Guizhou 550025 (CN)
(74) Representative: Goddar, Heinz J.
(86) International application number: PCT/CN2023/121379
(87) International publication number: WO 2024/148855

(57) **Abstract**

This application provides a code management method, performed by a code management system, where the code management system includes a hosting subsystem and an extension subsystem. The method includes: The extension subsystem receives a first code upload request. The extension subsystem sends first code or metadata of the first code to the hosting subsystem based on the first code upload request. The hosting subsystem invokes a code processing service based on the first code or the metadata of the first code to process the first code. In this method, the extension subsystem and the hosting subsystem collaborate to invoke the code processing service on a hosting subsystem side, so that a capability of the code processing service is used to manage the code. In this way, there is no need to manually manage the code, and there is no need for a user to additionally develop a feature related to code management, thereby improving code management efficiency and meeting a service requirement. In addition, there is no need for the user to maintain an entire code management system by itself, thereby greatly reducing operation and maintenance workloads and improving operation and maintenance efficiency.

## Description

This application claims priorities to Chinese Patent Application No. 202310063932.X, filed with the China National Intellectual Property Administration on January 13, 2023 and entitled "CODE MANAGEMENT METHOD AND RELATED SYSTEM", and to Chinese Patent Application No. 202310354090.3, filed with the China National Intellectual Property Administration on March 31, 2023 and entitled "CODE MANAGEMENT METHOD AND RELATED SYSTEM", both of which are incorporated herein by reference in their entireties.

### TECHNICAL FIELD

This application relates to the field of code management technologies, and in particular, to a code management method and system, a computing device cluster, a computer-readable storage medium, and a computer program product.

### BACKGROUND

To meet production and office requirements, many users (for example, enterprises, organizations, groups, or individuals) develop software for implementing specific functions, for example, intra-enterprise collaborative software like online documents and cloud conference. As a result, a large amount of code (code) is generated. As a new type of asset, the code needs to be managed to ensure code security, to prevent interests of the users from being damaged due to inappropriate code management.

Currently, many users (for example, large enterprises) build code hosting services by themselves in their independent environments (also referred to as self-owned environments, local environments, and locals), for example, in servers independently controlled by the users. Such a code hosting service includes a frontend service and a backend service. The frontend service may provide interfaces for user interaction, for example, code commit (commit) and code merge (merge). The backend service provides methods corresponding to the interfaces. The code hosting service is used to manage code generated when the users perform software development and testing.

However, these methods usually need manual code management by the users, which is inefficient and cannot meet a service requirement.

### SUMMARY

This application provides a code management method to use a capability of a code processing service to process code. In this way, there is no need to manually manage the code, thereby improving code management efficiency and meeting a service requirement. This application further provides a system corresponding to the method, a computing device cluster, a computer-readable storage medium, and a computer program product.

According to a first aspect, this application provides a code management method. The method may be performed by a code management system. The code management system may be a software system. The software system may be deployed in a computing device cluster, for example, a computing device cluster formed in a cloud environment and a user environment. The computing device cluster executes program code of the software system, to perform the code management method in this application. In some examples, the code management system may alternatively be a hardware system. For example, the code management system may be a computing device cluster with a code management function. When the hardware system runs, the code management method in this application is performed.

Specifically, the code management system includes a hosting subsystem and an extension subsystem. The extension subsystem receives a first code upload request, where the first code upload request includes first code. The extension subsystem sends the first code or metadata of the first code to the hosting subsystem based on the first code upload request. The hosting subsystem invokes a code processing service based on the first code or the metadata of the first code to process the first code.

In this method, the extension subsystem and the hosting subsystem collaborate to invoke the code processing service on a hosting subsystem side, so that a capability of the code processing service is used to process the code. In this way, there is no need to manually manage the code, and there is no need for a user to additionally develop a feature related to code management, thereby improving code management efficiency and meeting a service requirement. In addition, there is no need for the user to maintain an entire code management system by itself, thereby greatly reducing operation and maintenance workloads and improving operation and maintenance efficiency. The user can use the capability of the code processing service at minimum costs, thereby reducing code management costs.

In some possible implementations, the code processing service includes one or more of a code association service, a project management service, a pipeline service, a security check service, or a rule check service. The code association service associates code with a ticket. Further, when associating the code with the ticket, the code association service may further associate and display version information or commit information. The project management service manages a project in which the code is located, for example, managing a version. The pipeline service allows visualizing and orchestrating a continuous integration and continuous delivery software production line, shortens time to market of an application, and improves research and development efficiency. The security check service checks security of uploaded code. For example, the security check service can check, based on metadata, whether a third-party library that is used has a security vulnerability. The rule check service checks whether uploaded code complies with rules (for example, specifications during code development). For example, the rule check service can check, based on metadata, whether names of functions, variables, and the like comply with related specifications.

In this method, capabilities of various code processing services are used to process code. In this way, there is no need to manually manage the code, and there is no need for the user to additionally develop the feature related to code management, thereby significantly improving the code management efficiency.

In some possible implementations, the extension subsystem may further present a registration interface to the user; receives repository information configured by the user through the registration interface, where the repository information includes at least a location of a code repository; and then sends a repository registration request to the hosting subsystem, where the repository registration request includes the repository information. The hosting subsystem registers the code repository based on the repository information in the repository registration request.

In this method, the code repository is registered to provide a capability of locally uploading and downloading the code based on the code repository in a local environment, and invoke the code processing service in the cloud environment during code upload to perform associated processing.

In some possible implementations, the code repository is located on an extension subsystem side. When the extension subsystem is deployed in the user environment, the code repository is located in the user environment. Accordingly, the extension subsystem stores the first code to the code repository based on the first code upload request, and sends the metadata of the first code to the hosting subsystem.

In this method, the metadata of the first code is sent to the hosting subsystem to invoke the code processing service based on the metadata to process the code, thereby improving the code management efficiency. In addition, the user can independently control the code repository to keep the code in the user environment, thereby ensuring security of the code repository.

In some possible implementations, the hosting subsystem receives a second code upload request, where the second code upload request includes second code. The hosting subsystem may indicate the extension subsystem to store the second code in the code repository. The extension subsystem sends metadata of the second code to the hosting subsystem.

The second code upload request is a code upload request committed by an on-cloud user. This method supports collaboration between an on-cloud user and an off-cloud user in code development and testing. For example, the first code and the second code may be code written by the user for fixing different problems in a same project. For another example, the second code may be a further improvement by the on-cloud user on the first code to fix a same problem. In this way, the code processing service can be invoked to process the code, and the code can be processed collaboratively, thereby greatly improving development efficiency.

In some possible implementations, the code repository includes a primary repository located on the hosting subsystem side and an image repository located on the extension subsystem side. Accordingly, the extension subsystem sends the first code to the hosting subsystem based on the first code upload request, and the hosting subsystem stores the first code to the primary repository, and synchronizes the first code to the image repository.

The hosting subsystem can invoke the code processing service based on the first code itself instead of the metadata of the first code to process the code, so that processing can be fully and accurately performed, thereby improving code processing quality. In addition, the hosting subsystem synchronizes the first code to the image repository to download the code nearby, thereby improving code download efficiency.

In some possible implementations, the hosting subsystem may further receive a second code upload request, where the second code upload request includes second code. Then, the hosting subsystem may store the second code in the primary repository, and synchronizes the second code to the image repository.

The second code is code committed by an on-cloud user, that is, the method supports an off-cloud user in committing code and also supports an on-cloud user in committing code, to meet requirements in different scenarios. In addition, the hosting subsystem stores the second code in the primary repository, to invoke the code processing service based on the second code to process the code, thereby implementing associated code processing. In addition, the hosting subsystem synchronizes the second code to the image repository, to support subsequently downloading the code from the image repository, thereby accelerating code download speed.

In some possible implementations, the extension subsystem may further receive a code download request, where the code download request is for requesting to download third code. The third code may be the first code or the second code, or may be other code. Then, the extension subsystem downloads the third code from the code repository on the extension subsystem side. There is no need to download the code remotely from the hosting subsystem, thereby greatly accelerating the code download speed, reducing a code download delay, and improving user experience.

In some possible implementations, when an authentication success notification of the hosting subsystem is received, the extension subsystem may download the third code from the code repository on the extension subsystem side. In this way, validity and security of code download can be ensured. Alternatively, when the hosting subsystem is faulty, the extension subsystem may download the third code from the code repository on the extension subsystem side. In this way, when the hosting subsystem is faulty, a download capability can still be provided, so that availability is high.

In some possible implementations, the user may trigger a registration cancellation operation. For example, when a fault occurs on a cloud side, a user on the cloud side can trigger the registration cancellation operation. For another example, the extension subsystem may alternatively automatically trigger the registration cancellation operation when a registration cancellation condition is met. For example, if the extension subsystem fails to receive the code upload request in a target time period, the registration cancellation operation may be triggered. The extension subsystem can generate a registration cancellation request based on the registration cancellation operation, and send the registration cancellation request to the hosting subsystem. Accordingly, the hosting subsystem can delete an association between the user environment and the cloud environment based on the registration cancellation request, to unbind the user environment from the cloud environment. In this way, hot swapping of a code processing capability may be further implemented to meet a personalized requirement. For example, when a service has a higher security requirement, the registration cancellation operation can be triggered to implement code isolation.

According to a second aspect, this application provides a code management system. The code management system includes:
an extension subsystem, configured to receive a first code upload request, where the first code upload request includes first code; and
the extension subsystem is further configured to send the first code or metadata of the first code to the hosting subsystem based on the first code upload request; and
the hosting subsystem, configured to invoke a code processing service based on the first code or the metadata of the first code to process the first code.

In some possible implementations, the code processing service includes one or more of a code association service, a project management service, a pipeline service, a security check service, or a rule check service.

In some possible implementations, the extension subsystem is further configured to:
present a registration interface to a user; receive repository information configured by the user through the registration interface, where the repository information includes at least a location of a code repository; and then send a repository registration request to the hosting subsystem, where the repository registration request includes the repository information.

The hosting subsystem is further configured to:
register the code repository based on the repository information in the repository registration request.

In some possible implementations, the code repository is located on an extension subsystem side, and the extension subsystem is specifically configured to:
store the first code to the code repository based on the first code upload request, and send the metadata of the first code to the hosting subsystem.

In some possible implementations, the hosting subsystem is further configured to:
receive a second code upload request, where the second code upload request includes second code; and indicate the extension subsystem to store the second code in the code repository.

The extension subsystem is further configured to:
send metadata of the second code to the hosting subsystem.

In some possible implementations, the code repository includes a primary repository located on a hosting subsystem side and an image repository located on the extension subsystem side. The extension subsystem is specifically configured to:
send the first code to the hosting subsystem based on the first code upload request.

The hosting subsystem is further configured to:
store the first code to the primary repository, and synchronize the first code to the image repository.

In some possible implementations, the hosting subsystem is further configured to:
receive the second code upload request, where the second code upload request includes the second code; and
store the second code in the primary repository, and synchronize the second code to the image repository.

In some possible implementations, the extension subsystem is further configured to:
receive a code download request, where the code download request is for requesting to download third code; and
download the third code from the code repository on the extension subsystem side.

In some possible implementations, the extension subsystem is specifically configured to:
when an authentication success notification of the hosting subsystem is received, download the third code from the code repository on the extension subsystem side; or
when the hosting subsystem is faulty, download the third code from the code repository on the extension subsystem side.

According to a third aspect, this application provides a computing device cluster. The computing device cluster includes at least one computing device, and the at least one computing device includes at least one processor and at least one memory. The at least one processor and the at least one memory communicate with each other. The at least one processor is configured to execute instructions stored in the at least one memory, to enable the computing device or the computing device cluster to perform the code management method according to any one of the first aspect or the implementations of the first aspect.

According to a fourth aspect, this application provides a computer-readable storage medium. The computer-readable storage medium stores instructions. The instructions instruct a computing device or a computing device cluster to perform the code management method according to any one of the first aspect or the implementations of the first aspect.

According to a fifth aspect, this application provides a computer program product including instructions. When the computer program product runs on a computing device or a computing device cluster, the computing device or the computing device cluster is enabled to perform the code management method according to any one of the first aspect or the implementations of the first aspect.

In this application, based on the implementations provided in the foregoing aspects, the implementations may be further combined to provide more implementations.

### BRIEF DESCRIPTION OF DRAWINGS

To describe technical methods in embodiments of this application more clearly, the following briefly describes accompanying drawings for describing embodiments.
FIG. 1 is a diagram of an architecture of a code management system according to an embodiment of this application;
FIG. 2A and FIG. 2B are an interaction flowchart of a code management method according to an embodiment of this application;
FIG. 3 is an interface diagram of a registration interface according to an embodiment of this application;
FIG. 4 is a diagram of an architecture of a code management system in a scenario of independently controlling a code repository according to an embodiment of this application;
FIG. 5A and FIG. 5B are an interaction flowchart of a code management method in a scenario of independently controlling a code repository according to an embodiment of this application;
FIG. 6 is a diagram of an architecture of a code management system in a trusted cloud environment scenario according to an embodiment of this application;
FIG. 7A and FIG. 7B are an interaction flowchart of a code management method in a trusted cloud environment scenario according to an embodiment of this application;
FIG. 8 is a diagram of a structure of an extension subsystem according to an embodiment of this application;
FIG. 9 is a diagram of a structure of a hosting subsystem according to an embodiment of this application;
FIG. 10 is a diagram of a structure of a computing device according to an embodiment of this application;
FIG. 11 is a diagram of a structure of a computing device cluster according to an embodiment of this application;
FIG. 12 is a diagram of a structure of another computing device according to an embodiment of this application; and
FIG. 13 is a diagram of a structure of another computing device cluster according to an embodiment of this application.

### DESCRIPTION OF EMBODIMENTS

The terms "first" and "second" in embodiments of this application are merely intended for description, and shall not be understood as an indication or implication of relative importance or an implicit indication of a quantity of indicated technical features. Therefore, a feature limited by "first" or "second" may explicitly or implicitly include one or more features.

First, some technical terms in embodiments of this application are described.

A user environment is an independent environment or a self-owned environment of a user, and usually includes a computing device independently controlled by the user, for example, a server or a terminal independently controlled by the user. The terminal may be an electronic device that supports direct interaction with the user, and includes but is not limited to a desktop computer, a tablet computer, or a smartphone.

A cloud environment is a computing device cluster built by a cloud service provider (also referred to as a cloud vendor) to provide computing, storage, or network resources. The cloud service provider may provide computing, storage, or network resources for the user through a cloud service based on a requirement of the user. The cloud service may include the following types: infrastructure as a service (Infrastructure as a Service, IaaS), platform as a service (Platform as a Service, PaaS), or software as a service (Software as a Service, SaaS). For example, the cloud service provider may provide a cloud-based code hosting service in a SaaS mode.

When a user like a large-scale enterprise uses a code hosting service self-built in an independent environment to manage code generated during software development and testing, management efficiency is low and it is difficult to meet a service requirement in managing code. To resolve these problems, this application provides a code management method. The method may be performed by a code management system. The code management system may be a software system. The software system may be deployed in a computing device cluster, for example, a computing device cluster formed in a cloud environment and a user environment. The computing device cluster executes program code of the software system, to perform the code management method in this application. In some examples, the code management system may alternatively be a hardware system. For example, the code management system may be a computing device cluster with a code management function. When the hardware system runs, the code management method in this application is performed.

The code management system includes a hosting subsystem and an extension subsystem. In this method, the extension subsystem and the hosting subsystem collaborate to invoke a code processing service on a hosting subsystem side, so that a capability of the code processing service is used to process the code. In this way, there is no need to manually manage the code, and there is no need for the user to additionally develop a feature related to code management, thereby improving the code management efficiency and meeting the service requirement. In addition, there is no need for the user to maintain an entire code management system by itself. For example, the user can operate and maintain the extension subsystem in the code management system, and the hosting subsystem in the code management system can be operated and maintained by a hosting subsystem provider (such as the cloud service provider). This greatly reduces operation and maintenance workloads and improves operation and maintenance efficiency. The user can use the capability of the code processing service at minimum costs, thereby reducing code management costs.

To make the technical solutions of this application clearer and easier to understand, the following describes a system architecture of the code management system of this application with reference to embodiments.

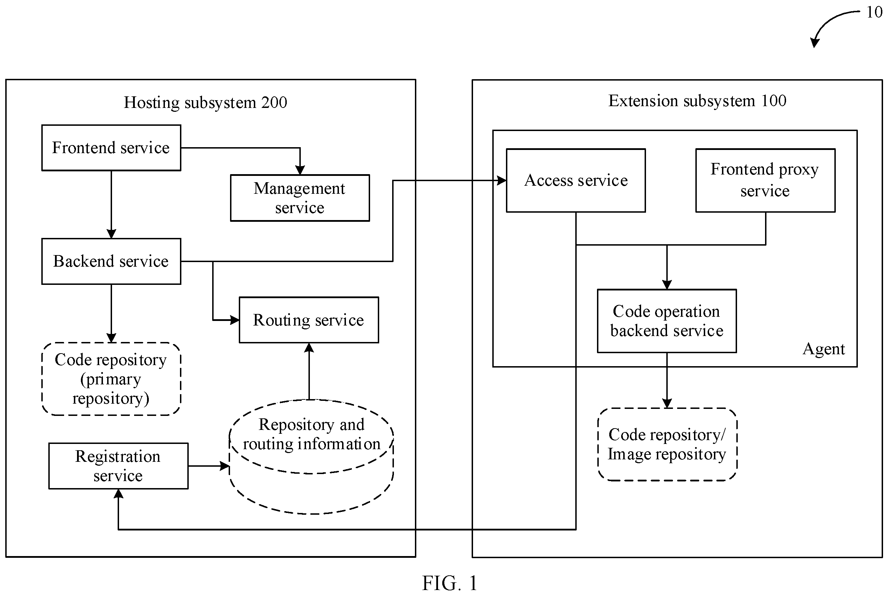

Refer to a diagram of an architecture of a code management system shown in FIG. 1. The code management system 10 includes an extension subsystem 100 and a hosting subsystem 200. The extension subsystem 100 may be deployed in a user environment, for example, deployed on a terminal. The hosting subsystem 200 may be deployed in a cloud environment, for example, deployed in a computing device cluster built by a cloud service provider. Collaboration between the extension subsystem 100 and the hosting subsystem 200 is also referred to as device-cloud collaboration, or collaboration between the user environment and the cloud environment. The extension subsystem 100 and the hosting subsystem 200 may be provided for a user as a service. Therefore, the extension subsystem 100 may also be referred to as an edge extension service. The hosting subsystem 200 may also be referred to as a cloud-based code hosting service or a cloud-based code hosting platform.

The edge extension service includes an edge extension component. The edge extension component may be a repository operation agent installed by the user in the user environment (a local network environment), and is denoted as an agent. The agent may include an access service, a frontend proxy service, and a code operation backend service. The access service is for accessing the cloud-based code hosting service to implement collaboration with the cloud-based code hosting service. The frontend proxy service provides an interface, for example, an application programming interface (application programming interface, API), a graphical user interface (graphical user interface, GUI), and a command user interface (command user interface, CUI). The interface may include interfaces for uploading and downloading code. The code operation backend service provides methods corresponding to the interfaces of the frontend proxy service, including but not limited to methods for uploading and downloading code.

The cloud-based code hosting service includes a frontend service, a backend service, a management service, a registration service, and a routing service. The frontend service provides interfaces, including an API, a GUI, and a CUI. The interfaces are for implementing functions of uploading, storing, or synchronizing code. The backend service provides methods corresponding to the interfaces of the frontend service. The management service provides login management and permission management. The login management is to authenticate a subscriber identity and identity authentication information (such as a password and a verification code) of the user to determine whether to allow the user to log in. The permission management is to manage permission for the user to access a code repository for a code operation (for example, uploading and downloading code) or use a data processing service (for example, a data processing service in the cloud environment).

The registration service is for performing an edge registration access operation after the edge extension component is installed by user. When performing the edge registration access operation, the registration service records repository and routing information of an edge access point (also referred to as an edge node, which may be specifically the agent). The repository and routing information includes routing information and repository information of the edge access point. The routing information of the edge access point includes one or both of an access address and a state. The access address includes an address exposed by the frontend proxy service (for example, a local address accessed on the cloud), and the state identifies whether the edge access point is available. The repository information includes at least a location of the code repository (for example, a location in the user environment or a location in the cloud environment). The code repository may be a repository, or may include a primary repository and an image repository. The primary repository is a primary node for writing to the code repository. Writing to the code repository all directs to the primary repository, which can provide a code read/write capability. The image repository is an image of the code repository, can synchronize incremental data from the primary repository in real time, and provides a code read capability. Further, the repository information may further include a synchronization state of the repository. The synchronization state of the repository identifies whether the primary repository and the image repository are consistent.

After preparations like installation of the repository operation agent and repository registration are completed, the edge extension service and the cloud-based code hosting service may collaborate to implement code management. The edge extension service (for example, the extension subsystem 100) is configured to receive a code upload request, store code in the code upload request to the code repository based on the code upload request, and synchronize the code or metadata of the code to a peer side of the code repository (for example, if the code repository is configured on an extension subsystem side, it indicates that the peer side of the code repository may be the hosting subsystem). The cloud-based code hosting service (for example, the hosting subsystem 200) is configured to invoke a code processing service based on the code or the metadata of the code, for example, invoke a code processing service in the cloud environment to process the code. The edge extension service is further configured to receive a code download request, and download code from the code repository in the user environment based on the code download request.

Based on the code management system 10 shown in FIG. 1, the user may install the agent in the local environment, and register the local environment on the cloud, so that the agent can provide a capability of locally uploading and downloading code based on the code repository in the local environment, and can invoke a code processing service to perform associated processing when uploading code. In addition, a backend code repository of the cloud-based code hosting service is extensible. The user may configure whether the primary repository uses cloud resources. When the user configures the primary repository to use cloud resources, that is, the primary repository is located in the cloud environment, a code repository, that is, the primary repository, may be extended at a backend of the cloud-based code hosting service. The code repository in the user environment is configured as the image repository to synchronize code in the primary repository in real time. The edge extension component in the user environment is deployed based on the cloud-based code hosting service, so that the routing service is used to control forwarding of an access request (for example, a code upload request) for the code repository and provide a read/write operation for a nearby repository, thereby improving read/write efficiency. A write operation on the code repository of the edge extension service may trigger synchronization of related metadata, to trigger associated processing of the code processing service.

Based on the code management system 10 shown in FIG. 1, this application further provides a code management method. The following describes the code management method in this application with reference to an embodiment.

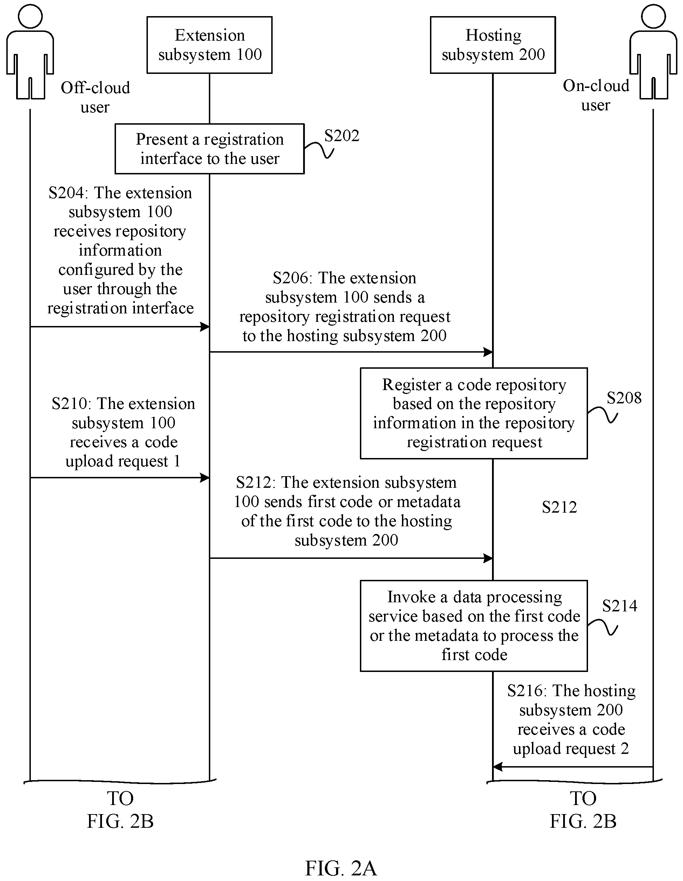

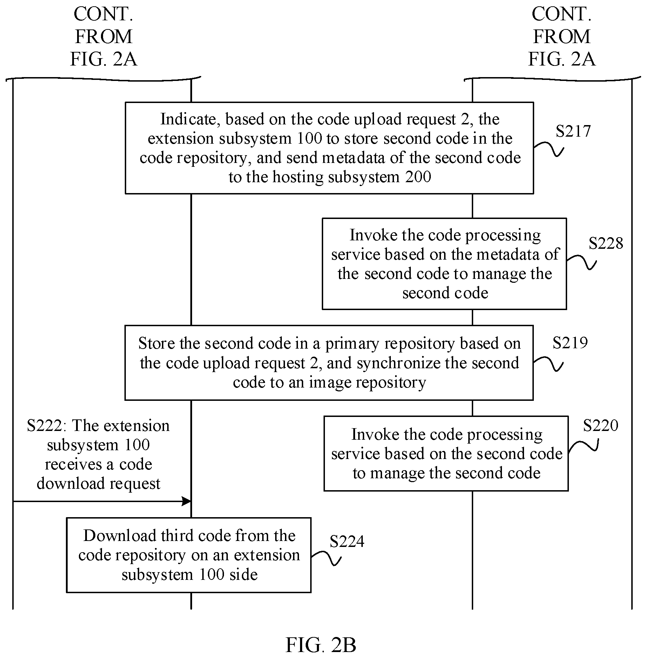

Refer to a flowchart of a code management method shown in FIG. 2A and FIG. 2B. The method includes the following steps.

S202: An extension subsystem 100 presents a configuration interface to a user.

S204: The extension subsystem 100 receives repository information configured by the user through the registration interface.

The configuration interface may be an interface for configuring the repository information to register a local environment (user environment) in a cloud environment, so that a capability of a related cloud service (for example, a code processing service) in the cloud environment can be used to process code. The extension subsystem 100 may send a code block corresponding to the configuration interface to a browser (browser) or a client (client) of the user, and the browser or the client loads the code block, so that the configuration interface is presented to the user.

The configuration interface may be a GUI or a CUI. The user (for example, an off-cloud user) may configure the repository information using a configuration control provided by the GUI, or configure the repository information by using a command line tool provided by the CUI. The repository information includes at least a location of a code repository. For example, the user may configure the location of the code repository to a location in the user environment. For another example, the user may alternatively configure the location of the code repository to a location in the cloud environment. In this case, an image repository may be configured in the user environment to synchronize data of the code repository, that is, the primary repository, in the cloud environment in real time, to support nearby reading/writing. On this basis, the location of the repository may include a location of the code repository configured in the user environment, or include a location of the primary repository and a location of the image repository. When the code repository includes the primary repository and the image repository, the repository information may further include a repository synchronization state that identifies whether the primary repository and the image repository are consistent. In some possible implementations, the registration interface may further support the user in configuring routing information of the repository, including an access address and a state of an edge access point. In some examples, the access address and the state of the edge access point may also be obtained by the extension subsystem 100.

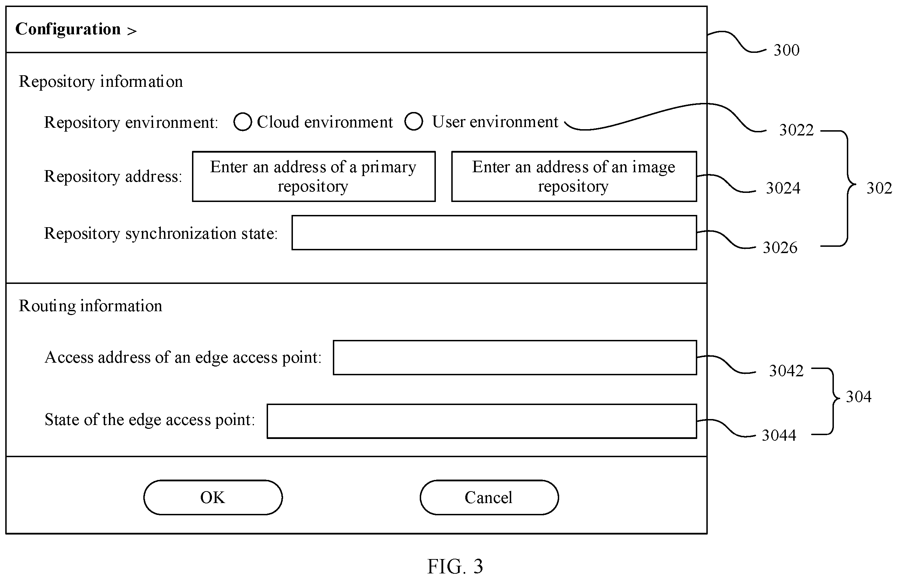

For ease of understanding, a configuration process is described in combination with an example. Refer to a diagram of a registration interface shown in FIG. 3. In this example, the registration interface 300 is a GUI. The registration interface 300 includes a repository configuration component 302, and the repository configuration component 302 may include a repository environment configuration control 3022, a repository address configuration control 3024, and a repository synchronization state configuration control 3026, which are respectively used to configure an environment in which a code repository is located, a repository address, and a repository synchronization state. The registration interface 300 further includes a route configuration component 304. The route configuration component 304 may include an access address configuration control 3042 and a state configuration control 3044 of an edge access point, which are respectively used to configure an access address and a state of the edge access point.

S206: The extension subsystem 100 sends a repository registration request to a hosting subsystem 200.

The extension subsystem 100 may generate the repository registration request based on the repository information configured by the user, and then send the repository registration request to the hosting subsystem 200, so that the hosting subsystem 200 registers the code repository in the cloud environment. In addition, the repository registration request generated by the extension subsystem 100 may further include the routing information of the repository, and the hosting subsystem 200 may further complete registration of the code repository in the cloud environment based on the routing information.

S208: The hosting subsystem 200 registers the code repository based on the repository information in the repository registration request.

Specifically, after receiving the repository registration request, the hosting subsystem 200 may identify a key field in the repository registration request to obtain the repository information, and then records the repository information in the cloud environment, to register the code repository. Further, the hosting subsystem 200 may record the routing information of the repository in the cloud environment, that is, the hosting subsystem 200 may record repository and routing information (the repository information and the routing information), to register the code repository. For example, the hosting subsystem 200 may record an address of the primary repository, an address of the image repository, and the repository synchronization state in the cloud environment, and record the access address and the state of the edge access point, to complete the registration.

It should be noted that S202 to S208 are preparations for the code management method, and may not be repeatedly performed after the registration of the repository (or the local environment) is completed.

S210: The extension subsystem 100 receives a code upload request 1.

A code upload request is for requesting to upload code. The code upload request 1 is also referred to as a first code upload request, to distinguish from another code upload request (for example, a code upload request of an on-cloud user). Specifically, when the user triggers a code commit operation, for example, a commit operation, via a browser or a client, the browser or the client may generate a code upload request, for example, the code upload request 1, and the extension subsystem 100 may receive the code upload request 1. The code upload request 1 carries code to be uploaded, for example, first code.

S212: The extension subsystem 100 sends the first code or metadata of the first code to the hosting subsystem 200 based on the code upload request 1.

When the code repository is configured on an extension subsystem 100 side (for example, configured in the user environment), the extension subsystem 100 may store the first code to the code repository on the extension subsystem 100 side (for example, the code repository in the user environment) based on the first code upload request, and then sends the metadata of the first code to the hosting subsystem 200, to synchronize the metadata of the first code to a hosting subsystem 200 side (for example, the cloud environment).

The metadata of the first code includes one or more of version information, commit information, and a ticket number (also referred to as a problem ticket number). The version information may include at least one of a version number before a change and a version number after a change. The commit information may include at least one or more of commit time, a committer, and a commit identifier (identifier, ID). The ticket number identifies a ticket completed by current code (a problem resolved by the current code). Further, the extension subsystem 100 may send a code snippet in the first code to the hosting subsystem 200 for subsequent associated processing. The code snippet may be an anonymized code snippet. In some examples, the code snippet may include a function definition, a declaration snippet, and a snippet of a referenced third-party library.

When the code repository includes the primary repository and the image repository, the primary repository is configured on the hosting subsystem 200 side (for example, in the cloud environment), and the image repository is configured on the extension subsystem 100 side (for example, in the user environment), the extension subsystem 100 may send the first code to the hosting subsystem 200 based on the first code upload request. Accordingly, the hosting subsystem 200 may store the first code to the primary repository, and synchronize the first code to the image repository. In this way, the image repository can store a copy of the first code.

S214: The hosting subsystem 200 invokes a code processing service based on the first code or the metadata of the first code to process the first code.

The code processing service is a service that has a code processing capability. For example, the code processing service may be a cloud service provided in the cloud environment to process code. The cloud service may be a third-party cloud service provided by a large quantity of open-source application developers, or a first-party cloud service provided by a cloud service provider. The code processing service includes one or more of a code association service, a project management service, a pipeline service, a security check service, or a rule check service.

The code association service associates code with a ticket (a problem ticket). Further, when associating the code with the ticket, the code association service may further associate and display version information or commit information. The project management service manages a project in which the code is located, for example, managing a version. The pipeline (Pipeline) service allows visualizing and orchestrating a continuous integration and continuous delivery (Continuous Integration and Continuous Delivery, CI/CD) software production line, helps enterprises quickly realize continuous delivery and efficient automation in DevOps, shortens time to market of an application, and improves research and development efficiency. The security check service checks security of uploaded code. For example, the security check service can check, based on metadata, whether a third-party library that is used has a security vulnerability. The rule check service checks whether uploaded code complies with rules (for example, specifications during code development). For example, the rule check service can check, based on metadata, whether names of functions, variables, and the like comply with related specifications.

When the code repository is configured on an extension subsystem 100 side (for example, in the user environment), the hosting subsystem 200 can invoke the code processing service based on the metadata of the first code to process the first code. In some possible implementations, the hosting subsystem 200 may invoke the code processing service based on the metadata of the first code and in combination with a snippet of the first code to process the first code.

When the code repository is configured on the hosting subsystem 200 side (for example, the cloud environment), for example, the code repository includes the primary repository and the image repository, the primary repository is configured in the cloud environment, and the image repository is configured in the user environment, the hosting subsystem 200 may invoke the code processing service based on the first code (for example, the first code stored in the primary repository in the cloud environment) to process the first code. Compared with code management based on the metadata, the hosting subsystem 200 may invoke the code processing service based on the first code to process the first code, thereby achieving better effect. For example, during security check, a more comprehensive check can be performed to ensure security.

S216: The hosting subsystem 200 receives a code upload request 2. When the code repository is configured on the extension subsystem 100 side, S217 and S218 are performed. When the primary repository in the code repository is configured on the hosting subsystem 200 side, S219 and S220 are performed.

The code upload request 2 is also referred to as a second code upload request. The code upload request 2 may be a code upload request committed by the off-cloud user (for example, a user that triggers a code upload operation last time), or may be a code upload request committed by the on-cloud user. FIG. 2A and FIG. 2B show an example in which the code upload request is the code upload request committed by the on-cloud user. The code upload request 2 includes second code, and the second code may be different from the first code. It should be noted that the on-cloud user and the off-cloud user can collaborate in code development and testing. For example, the first code and the second code may be code written by the user for fixing different problems in a same project. For another example, the second code may be a further improvement by the on-cloud user on the first code to fix a same problem.

S217: The hosting subsystem 200 indicates, based on the code upload request 2, the extension subsystem 100 to store the second code in the code repository, and sends metadata of the second code to the hosting subsystem 200.

S218: The hosting subsystem 200 invokes the code processing service based on the metadata of the second code to process the second code.

When the code repository is configured on the extension subsystem 100 side (which may be usually the user environment), the hosting subsystem 200 may indicate, based on the second code upload request, for example, the code upload request 2, the extension subsystem 100 to store the second code to the code repository. For example, the hosting subsystem 200 may indicate the extension subsystem 100 to store the second code in the code repository in the user environment.

For subsequent code processing, the extension subsystem 100 further sends the metadata of the second code to the hosting subsystem 200, to synchronize the metadata of the second code to the hosting subsystem 200 side (for example, the cloud environment). The metadata of the second code includes one or more of version information, commit information, and a ticket number. Similar to the processing of the first code, the extension subsystem 100 may also send a code snippet in the second code to the hosting subsystem 200, for example, an anonymized code snippet, for subsequent associated processing.

S219: The hosting subsystem 200 stores the second code in the primary repository based on the code upload request 2, and synchronize the second code to the image repository.

S220: The hosting subsystem 200 invokes the code processing service based on the second code to process the second code.

When the code repository includes the primary repository and the image repository, the primary repository is configured in the cloud environment, and the image repository is configured in the user environment, the hosting subsystem 200 may store the second code to the primary repository in the cloud environment, and store a copy of the second code in the image repository in the user environment in a synchronous manner. Specifically, the hosting subsystem 200 may store the second code in the primary repository in the cloud environment, and indicate the extension subsystem 100 to synchronize the second code in the image repository in the user environment. In this way, the image repository can store the copy of the second code.

For a process in which the hosting subsystem 200 invokes the code processing service based on the second code or the metadata of the second code to process the second code, refer to related content descriptions in S214 in which the hosting subsystem 200 invokes the code processing service based on the first code or the metadata of the first code to process the first code. Details are not described herein again.

It should be further noted that S216 to S220 are optional steps in this embodiment of this application, and the steps may not be performed when the code management method in this embodiment of this application is performed. For example, for independent development by the off-cloud user, S216 to S220 may not be performed.

S222: The extension subsystem 100 receives a code download request.

The code download request is for requesting to download code, for example, download third code. The third code may be the first code or the second code, or may be other code. This is not limited in this embodiment.

S224: The extension subsystem 100 downloads the third code from the code repository on the extension subsystem 100 side.

Specifically, the extension subsystem 100 may send an authentication request to the hosting subsystem 200 to request the hosting subsystem 200 to perform authentication, to determine, based on an authentication result, whether to allow the user to download the third code. When the extension subsystem 100 receives an authentication success notification of the hosting subsystem, it indicates that the authentication is successful, and the extension subsystem 100 may download the third code from the code repository on the extension subsystem 100 side (for example, the user environment).

In some possible implementations, when the user uses a local edge extension service to download the code, if a cloud service is faulty, for example, the hosting subsystem 200 is faulty, the local edge extension service may be degraded, and can still provide a download and use capability, without being unavailable due to a cloud service fault. For example, the extension subsystem 100 may download the third code from the code repository in the user environment when the hosting subsystem 200 is faulty. The extension subsystem 100 may send an authentication request to the hosting subsystem 200. If no response message corresponding to the authentication request is received within specified time, the extension subsystem 100 may determine that the hosting subsystem 200 is faulty.

Based on the foregoing content descriptions, this embodiment of this application provides the code management method. In this method, the local environment (user environment) is registered with the cloud environment so that the code processing service in the cloud environment can be invoked in a code upload process, so that a capability of the code processing service is used to process the code. In this way, there is no need to manually manage the code, and there is no need for the user to additionally develop a feature related to code management, thereby improving code management efficiency and meeting a service requirement. In addition, there is no need for the user to maintain an entire code management system by itself, thereby greatly reducing operation and maintenance workloads and improving operation and maintenance efficiency.

Based on the embodiment shown in FIG. 2A and FIG. 2B, this application further provides different application scenarios to describe the code management method in this application.

In a first scenario, a user chooses to independently control a code repository, and the code repository is configured in a user environment. In this way, code can be kept in the user environment, thereby ensuring security of the code repository.

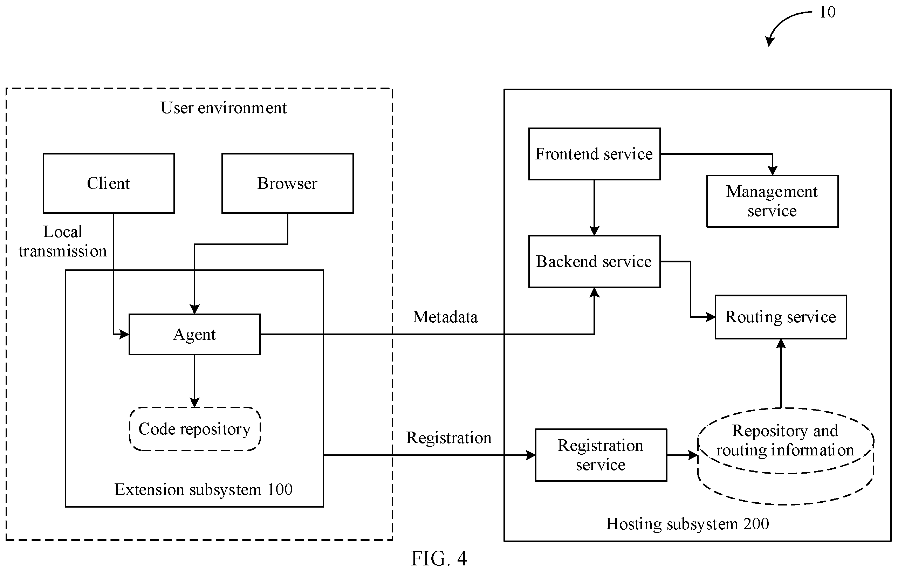

FIG. 4 is a diagram of an architecture of a code management system in a scenario of independently controlling a code repository. As shown in FIG. 4, a user selects to register the code repository (also referred to as a user repository) in an off-cloud environment, that is, a user environment, and no code repository is configured in a cloud environment. The user may perform code operations, such as code upload and download (for code browsing and collaboration), via a browser or a client.

The following describes the code management method in the scenario of independently controlling a code repository with reference to an accompanying drawing.

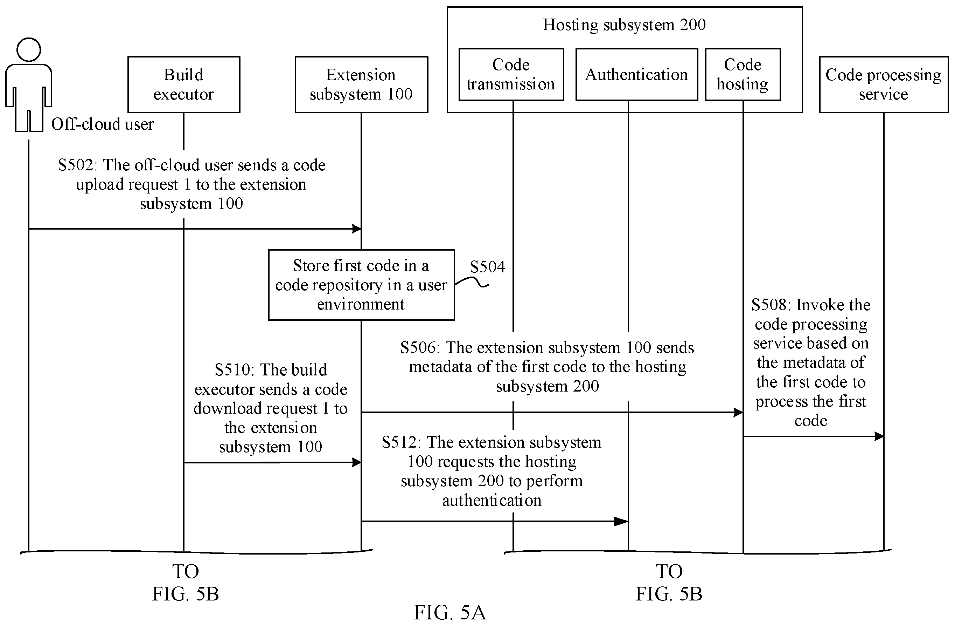

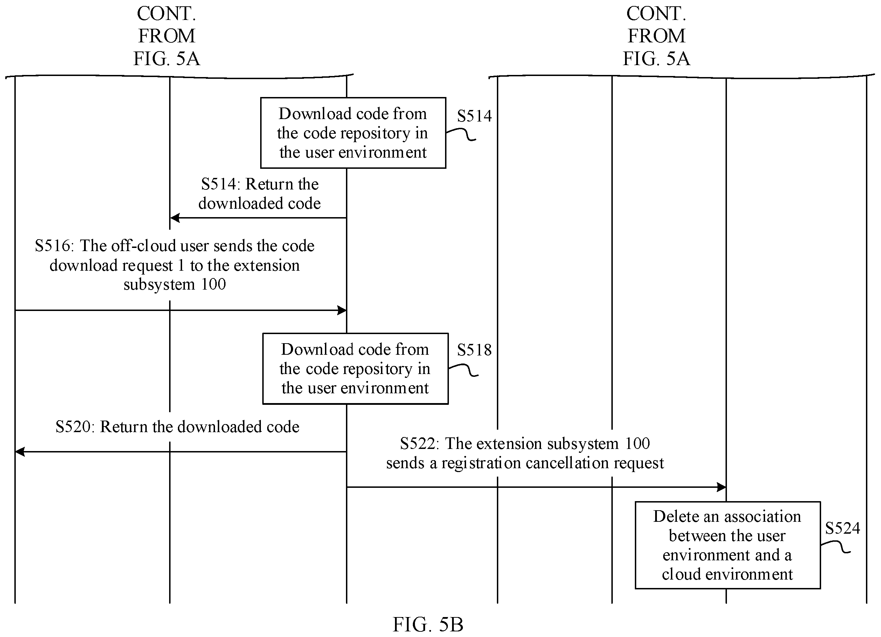

FIG. 5A and FIG. 5B are an interaction flowchart of a code management method in a scenario of independently controlling a code repository. The method includes the following steps.

S502: An off-cloud user sends a code upload request 1 to an extension subsystem 100.

S504: The extension subsystem 100 stores first code in a code repository in a user environment.

S506: The extension subsystem 100 sends metadata of the first code to a hosting subsystem 200.

S508: The extension subsystem 100 invokes a code processing service based on the metadata of the first code to process the first code.

For specific implementations of S502 to S508, refer to the related content descriptions in the embodiment shown in FIG. 2A and FIG. 2B. Details are not described herein again.

S510: A build executor sends a code download request 1 to the extension subsystem 100.

The build executor is configured to build an application based on developed code. When receiving a build task, the build executor can send the code download request 1 to the extension subsystem 100 to download the code for operations such as compilation and linking, thereby building the application.

S512: The extension subsystem 100 requests the hosting subsystem 200 to perform authentication. When the authentication is successful or the hosting subsystem is faulty, S514 is performed.

It should be noted that S512 is an optional step in this embodiment of this application, and S514 may not be performed when the code management method in this embodiment of this application is performed.

S514: The extension subsystem 100 downloads code from the code repository in the user environment, and returns the code to the build executor.

S516: The off-cloud user sends a code download request 2 to the extension subsystem 100.

Specifically, the off-cloud user may trigger a code operation via a client or a browser, to send the code download request 2 to the extension subsystem 100. It should be noted that the code download request 2 and the code download request 1 can request to download same code. For example, if an error occurs during building by the build executor, the off-cloud user can download the code to analyze a cause of the error.

S518: The extension subsystem 100 requests the hosting subsystem 200 to perform authentication. When the authentication is successful or the hosting subsystem is faulty, S520 is performed.

S520: The extension subsystem 100 downloads the code from the code repository in the user environment, and returns the code to the off-cloud user.

S522: The extension subsystem 100 sends a registration cancellation request.

S524: The hosting subsystem 200 deletes an association between the user environment and the cloud environment based on the registration cancellation request.

In some embodiments, the user may trigger a registration cancellation operation. For example, when a cloud side is faulty, the user may trigger the registration cancellation operation. In some other embodiments, the extension subsystem 100 may alternatively automatically trigger the registration cancellation operation when a registration cancellation condition is met. For example, if the extension subsystem 100 fails to receive the code upload request in a target time period, the registration cancellation operation may be triggered. The extension subsystem 100 can generate a registration cancellation request based on the registration cancellation operation, and send the registration cancellation request to the hosting subsystem 200. Accordingly, the hosting subsystem 200 can delete an association between the user environment and the cloud environment based on the registration cancellation request, to unbind the user environment from the cloud environment.

In a second scenario, a user chooses to trust a cloud environment, configures a primary repository in the cloud environment, and configures an image repository in a user environment. In this way, uploading and downloading can be implemented nearby, and cloud resources can be fully used to perform associated processing.

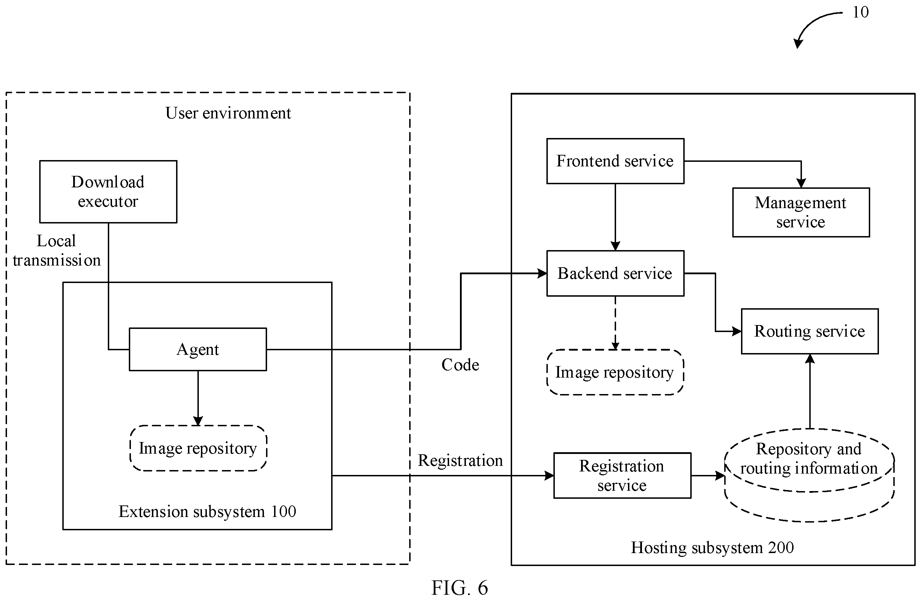

FIG. 6 is a diagram of an architecture of a code management system in a trusted cloud environment scenario. As shown in FIG. 6, a user chooses to configure a primary repository of a code repository in a cloud environment, and configure an image repository of the code repository in a user environment. The user may perform code operations, such as code upload and download (for code browsing and collaboration), via a browser or a client.

The following describes the code management method in the scenario of independently controlling a code repository with reference to an accompanying drawing.

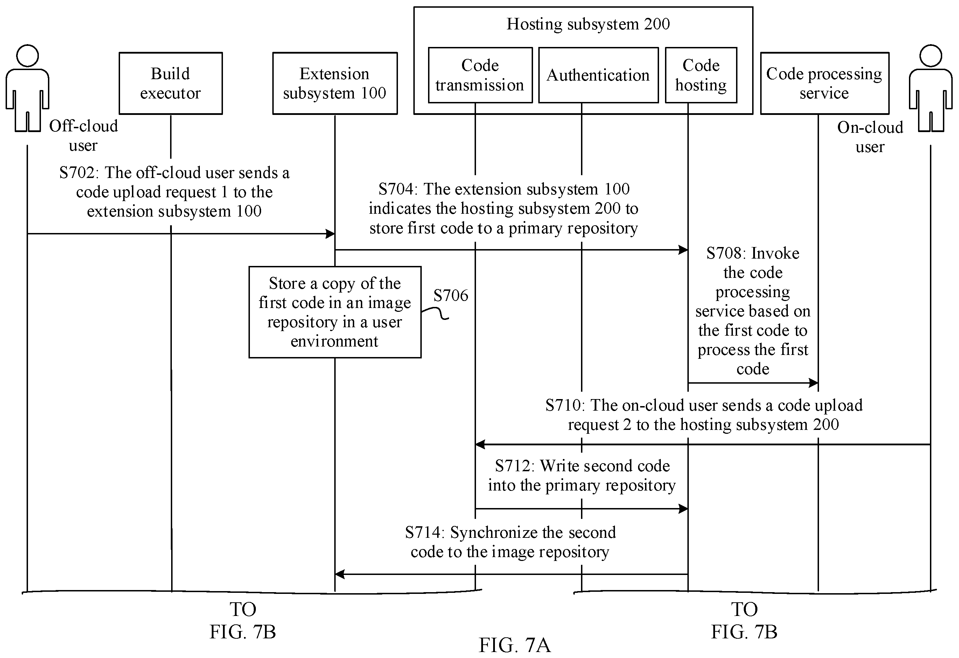

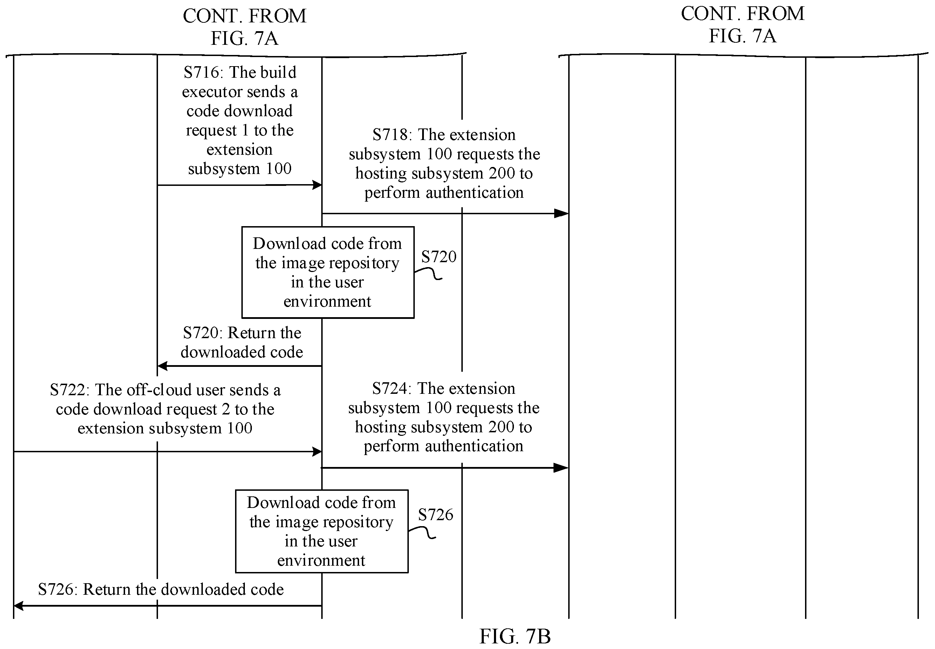

FIG. 7A and FIG. 7B are an interaction flowchart of a code management method in a trusted cloud environment scenario. The method includes the following steps.

S702: An off-cloud user sends a code upload request 1 to an extension subsystem 100.

S704: The extension subsystem 100 indicates a hosting subsystem 200 to store first code to a primary repository.

S706: The extension subsystem 100 stores a copy of the first code in an image repository in a user environment.

S708: The extension subsystem 100 invokes a code processing service based on the first code to process the first code.

For specific implementations of S702 to S708, refer to the related content descriptions in the embodiment shown in FIG. 2A and FIG. 2B. Details are not described herein again.

S710: An on-cloud user sends a code upload request 2 to the hosting subsystem 200.

Specifically, the on-cloud user and the off-cloud user may collaborate to perform software development (for example, application development). On this basis, the on-cloud user may access the hosting subsystem 200 via a client or a browser, to send the code upload request 2 to the hosting subsystem 200. The code upload request 2 includes second code. The second code may be different from the first code.

S712: The hosting subsystem 200 writes the second code into the primary repository in the cloud environment.

S714: The hosting subsystem 200 indicates the extension subsystem 100 to synchronize the second code to an image repository.

In consideration of synchronization efficiency, the extension subsystem 100 can synchronize the second code to the image repository in an incremental synchronization manner. In another possible implementation of this embodiment of this application, the extension subsystem 100 may alternatively synchronize the second code to the image repository in another synchronization manner, for example, a full synchronization manner.

S716: A build executor sends a code download request 1 to the extension subsystem 100.

The build executor is configured to build an application based on developed code. When receiving a build task, the build executor can send the code download request 1 to the extension subsystem 100 to download the code for operations such as compilation and linking, thereby building the application.

S718: The extension subsystem 100 requests the hosting subsystem 200 to perform authentication. When the authentication is successful or the hosting subsystem is faulty, S720 is performed.

It should be noted that S718 is an optional step in this embodiment of this application, and S720 may not be performed when the code management method in this embodiment of this application is performed.

S720: The extension subsystem 100 downloads code from the image repository in the user environment, and returns the code to the build executor.

S722: The off-cloud user sends a code download request 2 to the extension subsystem 100.

S724: The extension subsystem 100 requests the hosting subsystem 200 to perform authentication. When the authentication is successful or the hosting subsystem is faulty, S726 is performed.

S726: The extension subsystem 100 downloads the code from the image repository in the user environment, and returns the code to the off-cloud user.

Specifically, the off-cloud user may trigger a code operation via a client or a browser, to send the code download request 2 to the extension subsystem 100. It should be noted that the code download request 2 and the code download request 1 can request to download same code. For example, if an error occurs during building by the build executor, the off-cloud user can download the code to analyze a cause of the error.

Based on the code management method provided in embodiments of this application, an embodiment of this application further provides the code management system 10 that is described above. The following describes the code management system 10 with reference to the accompanying drawings.

Refer to the diagram of a structure of the code management system 10 shown in FIG. 1. The system 10 includes an extension subsystem 100 and a hosting subsystem 200. The extension subsystem 100 is configured to: receive a first code upload request, where the first code upload request includes first code; and send the first code or metadata of the first code to the hosting subsystem 200 based on the first code upload request. The hosting subsystem 200 is configured to invoke a code processing service based on the first code or the metadata of the first code to process the first code.

For example, the extension subsystem 100 and the hosting subsystem 200 may be implemented by using hardware, or may be implemented by using software.

When implemented by using software, the extension subsystem 100 and the hosting subsystem 200 may be applications running on a computing device, for example, computing engines. In consideration of portability and auto scaling, the applications may further be virtualized by using a virtualization service. The virtualization service may include a virtual machine (virtual machine, VM) service, a bare metal server (bare metal server, BMS) service, and a container (container) service. The VM service may be a service of virtualizing a virtual machine (virtual machine, VM) resource pool on a plurality of physical hosts by using a virtualization technology, to provide a VM for a user on demand. The BMS service is a service of virtualizing a BMS resource pool on a plurality of physical hosts to provide a BMS on demand for a user to use. The container service is a service of virtualizing a container resource pool on a plurality of physical hosts to provide a container on demand for a user to use. The VM is a simulated virtual computer, namely, a logical computer. The BMS is an elastically scalable high-performance computing service whose computing performance is the same as that of a conventional physical machine, and has a feature of secure physical isolation. The container is a kernel virtualization technology capable of providing lightweight virtualization to isolate user spaces, processes, and resources. It should be understood that the VM service, the BMS service, and the container service in the virtualization service are merely used as specific examples. During actual application, the virtualization service may alternatively be another lightweight or heavyweight virtualization service. This is not specifically limited herein.

When implemented by using hardware, the extension subsystem 100 may be implemented via a terminal, and the hosting subsystem 200 may include at least one computing device, for example, a cloud server. The extension subsystem 100 and the hosting subsystem 200 may alternatively be devices implemented by using an application-specific integrated circuit (application-specific integrated circuit, ASIC) or a programmable logic device (programmable logic device, PLD). The PLD may be implemented by using a complex programmable logic device (complex programmable logic device, CPLD), a field-programmable gate array (field-programmable gate array, FPGA), a generic array logic (generic array logic, GAL), or any combination thereof.

In some possible implementations, the code processing service includes one or more of a code association service, a project management service, a pipeline service, a security check service, or a rule check service.

In some possible implementations, the extension subsystem 100 is further configured to:
present a registration interface to a user; receive repository information configured by the user through the registration interface, where the repository information includes at least a location of a code repository; and then send a repository registration request to the hosting subsystem, where the repository registration request includes the repository information.

The hosting subsystem 200 is further configured to:
register the code repository based on the repository information in the repository registration request.

In some possible implementations, the code repository is located on an extension subsystem 100 side, and the extension subsystem 100 is specifically configured to:
store the first code to the code repository based on the first code upload request, and send the metadata of the first code to the hosting subsystem.

In some possible implementations, the hosting subsystem 200 is further configured to:
receive a second code upload request, where the second code upload request includes second code; and indicate the extension subsystem to store the second code in the code repository.

The extension subsystem 100 is further configured to:
send metadata of the second code to the hosting subsystem.

In some possible implementations, the code repository includes a primary repository located on a hosting subsystem side and an image repository located on the extension subsystem side. The extension subsystem 100 is specifically configured to:
send the first code to the hosting subsystem based on the first code upload request.

The hosting subsystem 200 is further configured to:
store the first code to the primary repository, and synchronize the first code to the image repository.

In some possible implementations, the hosting subsystem 200 is further configured to:
receive the second code upload request, where the second code upload request includes the second code; and
store the second code in the primary repository, and synchronize the second code to the image repository.

In some possible implementations, the extension subsystem 100 is further configured to:
receive a code download request, where the code download request is for requesting to download third code; and
download the third code from the code repository on the extension subsystem side.

In some possible implementations, the extension subsystem 100 is specifically configured to:
when an authentication success notification of the hosting subsystem 200 is received, download the third code from the code repository on the extension subsystem side; or
when the hosting subsystem 200 is faulty, download the third code from the code repository on the extension subsystem 100 side.

On the basis of the code management system 10 shown in FIG. 1, an embodiment of this application further provides an extension subsystem 100 and a hosting subsystem 200. The following describes the extension subsystem 100 and hosting subsystem 200 from a perspective of function modularization.

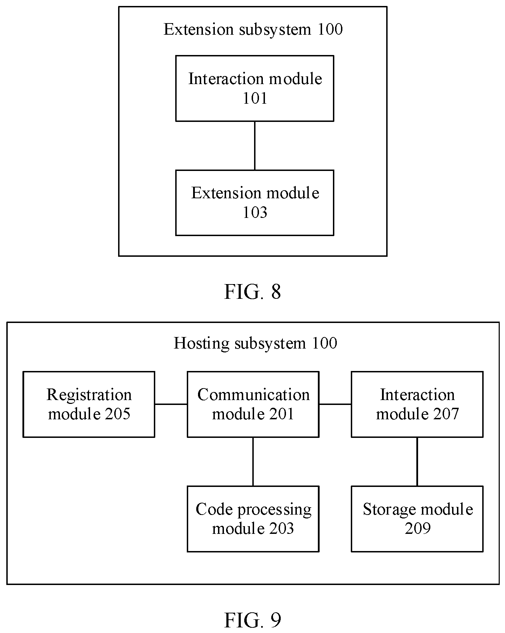

FIG. 8 is a diagram of a structure of an extension subsystem 100. The extension subsystem 100 includes:
an interaction module 101, configured to receive a first code upload request, where the first code upload request includes first code; and
an extension module 103, configured to send the first code or metadata of the first code to the hosting subsystem based on the first code upload request.

In some possible implementations, the interaction module 101 is further configured to:
present a registration interface to a user; receive repository information configured by the user through the registration interface, where the repository information includes at least a location of a code repository; and then send a repository registration request to the hosting subsystem, where the repository registration request includes the repository information, and the repository information is used by the hosting subsystem to register the code repository.

In some possible implementations, the code repository is located on an extension subsystem 100 side, and the extension module 103 in the extension subsystem 100 is specifically configured to:
store the first code to the code repository based on the first code upload request, and send the metadata of the first code to the hosting subsystem 200.

In some possible implementations, the extension module 103 is further configured to:
store the second code in the code repository based on an indication of the hosting subsystem 200.

The extension module 103 is specifically configured to:
send metadata of the second code to the hosting subsystem 200.

In some possible implementations, the code repository includes a primary repository located on a hosting subsystem 200 side and an image repository located on the extension subsystem 100 side. The extension module 104 is specifically configured to:
send the first code to the hosting subsystem 200 based on the first code upload request, so that the hosting subsystem 200 stores the first code to the primary repository, and synchronizes the first code to the image repository.

In some possible implementations, the interaction module 101 is further configured to:
receive a code download request, where the code download request is for requesting to download third code.

The extension module 103 is further configured to:
download the third code from the code repository on the extension subsystem 100 side.

In some possible implementations, the extension module 103 is specifically configured to:
when an authentication success notification of the hosting subsystem 200 is received, download the third code from the code repository on the extension subsystem 100 side; or
when the hosting subsystem 200 is faulty, download the third code from the code repository on the extension subsystem 100 side.

FIG. 9 is a diagram of a structure of a hosting subsystem 200. The hosting subsystem 200 includes:
a communication module 201, configured to receive first code or metadata of the first code that is sent by an extension subsystem 100; and
a code processing module 203, configured to invoke a code processing service based on the first code or the metadata of the first code to process the first code.

In some possible implementations, the code processing service includes one or more of a code association service, a project management service, a pipeline service, a security check service, or a rule check service.

In some possible implementations, the communication module 201 is further configured to:
receive a repository registration request sent by the extension subsystem 100, where the repository registration request includes repository information configured by a user through a registration interface, and the repository information includes at least a location of a code repository.

The hosting subsystem 200 further includes:
a registration module 205, configured to register the code repository based on the repository information in the repository registration request.

In some possible implementations, the hosting subsystem 200 further includes:
an interaction module 207, configured to receive a second code upload request, where the second code upload request includes second code; and indicate the extension subsystem 100 to store the second code in the code repository.

The communication module 201 is further configured to:
receive the metadata of the second code that is sent by the extension subsystem 100.

In some possible implementations, the code repository includes a primary repository located on a hosting subsystem 200 side and an image repository located on the extension subsystem 100 side. The communication module 201 is specifically configured to:
receive the first code sent by the extension subsystem 100.

The hosting subsystem 200 further includes:
a storage module 209, configured to store the first code to the primary repository, and synchronize the first code to the image repository.

In some possible implementations, the hosting subsystem 200 further includes:
an interaction module 207, configured to receive a second code upload request, where the second code upload request includes second code; and
a storage module 209, configured to store the second code in the primary repository, and synchronize the second code to the image repository.

Because the extension subsystem 100 and the hosting subsystem 200 shown in FIG. 7A, FIG. 7B, and FIG. 8 correspond to the method shown in FIG. 2A and FIG. 2B, for specific implementations and technical effect of the extension subsystem 100 and the hosting subsystem 200 shown in FIG. 7A, FIG. 7B, and FIG. 8, refer to related descriptions in the foregoing embodiments. Details are not described herein again.

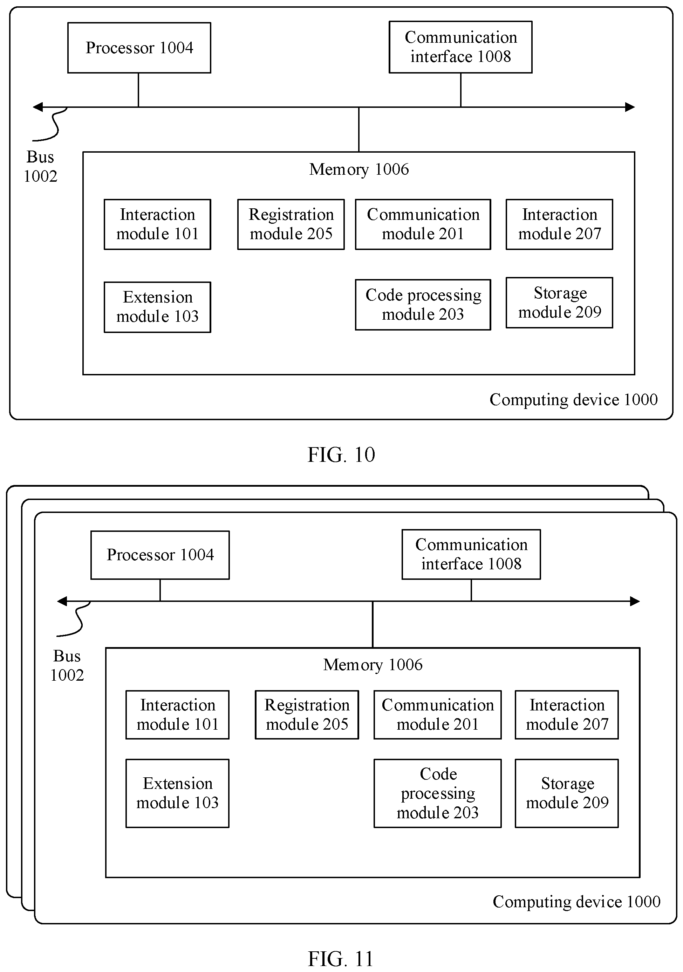

This application further provides a computing device 1000. As shown in FIG. 10, the computing device 1000 includes a bus 1002, a processor 1004, a memory 1006, and a communication interface 1008. The processor 1004, the memory 1006, and the communication interface 1008 communicate with each other through the bus 1002. The computing device 1000 may be a server or a terminal device. It should be understood that quantities of processors and memories in the computing device 1000 are not limited in this application.

The bus 1002 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 10, but it does not mean that there is only one bus or only one type of bus. The bus 1002 may include a path for information transfer between various components (for example, the memory 1006, the processor 1004, and the communication interface 1008) of the computing device 1000.

The processor 1004 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1006 may include a volatile memory (volatile memory), for example, a random access memory (random access memory, RAM). The memory 1006 may further include a non-volatile memory (non-volatile memory), for example, a read-only memory (read-only memory, ROM), a flash memory, a hard disk drive (hard disk drive, HDD), or a solid-state drive (solid-state drive, SSD). The memory 1006 stores executable program code. The processor 1004 executes the executable program code to implement the foregoing code management method. Specifically, the memory 1006 stores instructions used by the code management system 10 to execute the code management method.

The communication interface 1008 uses a transceiver module, for example, but not limited to, a network interface card or a transceiver, to implement communication between the computing device 1000 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 11, the computing device cluster includes at least one computing device 1000. A memory 1006 in the one or more computing devices 1000 in the computing device cluster may store same instructions used by the code management system 10 to perform the code management method.

In some possible implementations, the one or more computing devices 1000 in the computing device cluster may alternatively be configured to execute some instructions used by the code management system 10 to perform the code management method. In other words, a combination of one or more computing devices 1000 may jointly execute instructions used by the code management system 10 to perform the code management method.

It should be noted that memories 1006 in different computing devices 1000 in the computing device cluster may store different instructions used for performing some functions of the code management system 10.

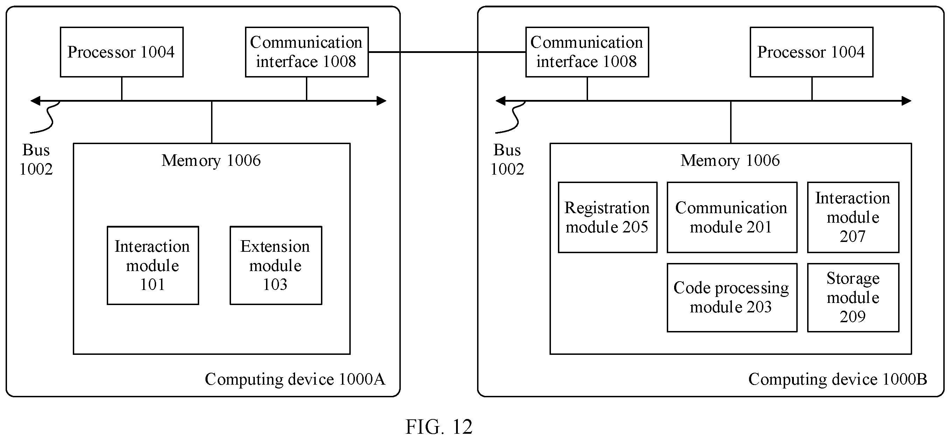

FIG. 12 shows a possible implementation. As shown in FIG. 12, two computing devices 1000A and 1000B are connected through a communication interface 1008. A memory in the computing device 1000A stores instructions used to execute functions of the interaction module 101 and the extension module 103. A memory in the computing device 1000B stores instructions used to execute functions of the communication module 201 and the code processing module 203. Further, the memory in the computing device 700B further stores instructions used to execute functions of the registration module 205, the interaction module 207, and the storage module 209. In other words, memories 1006 of the computing devices 1000A and 1000B jointly store instructions for the code management system 10 to perform the code management method.

A connection manner between computing device clusters shown in FIG. 12 may consider a status that the code management method provided in this application needs to invoke a code processing service to perform code processing. Therefore, it is considered that functions implemented by the interaction module 101 and the extension module 103 are executed by the computing device 1000A, and functions implemented by the communication module 201, the code processing module 203, the registration module 205, the interaction module 207, and the storage module 209 (if any) are executed by the computing device 1000B.

It should be understood that functions of the computing device 1000A shown in FIG. 12 may alternatively be completed by a plurality of computing devices 1000. Similarly, functions of the computing device 1000B may alternatively be completed by the plurality of computing devices 1000.

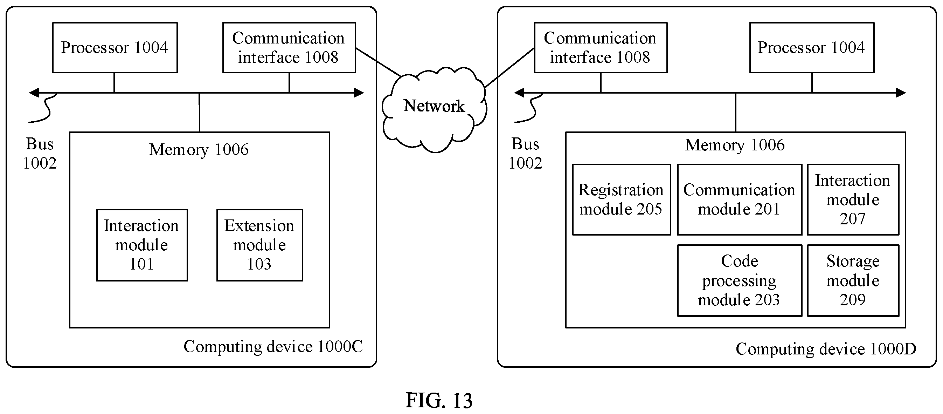

In some possible implementations, the one or more computing devices in the computing device cluster may be connected through a network. The network may be a wide area network, a local area network, or the like. FIG. 13 shows a possible implementation. As shown in FIG. 13, two computing devices 1000C and 1000D are connected through a network. Specifically, the computing devices are connected to the network through communication interfaces in the computing devices. In this possible implementation, a memory 1006 in the computing device 1000C stores instructions for executing functions of the interaction module 101 and the extension module 103. In addition, the memory 1006 in the computing device 1000D stores instructions for executing functions of the communication module 201, the code processing module 203, the registration module 205, the interaction module 207, and the storage module 209.

It should be understood that functions of the computing device 1000C shown in FIG. 13 may alternatively be completed by a plurality of computing devices 1000. Similarly, functions of the computing device 1000D may alternatively be completed by a plurality of computing devices 1000.

Embodiments of this application further provide a computer-readable storage medium. The computer-readable storage medium may be any usable medium accessible by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the computing device to perform the foregoing code management method applied to the code management system 10.

An embodiment of this application further provides a computer program product including instructions. The computer program product may be software or a program product that includes the instructions and that can be run on a computing device or stored in any usable medium. When the computer program product runs on at least one computing device, the at least one computing device is enabled to perform the foregoing code management method.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of the present invention.

## Claims

1. A code management method, performed by a code management system, wherein the code management system comprises a hosting subsystem and an extension subsystem, and the method comprises:
receiving, by the extension subsystem, a first code upload request, wherein the first code upload request comprises first code;
sending, by the extension subsystem, the first code or metadata of the first code to the hosting subsystem based on the first code upload request; and
invoking, by the hosting subsystem, a code processing service based on the first code or the metadata of the first code to process the first code.

2. The method according to claim 1, wherein the code processing service comprises one or more of a code association service, a project management service, a pipeline service, a security check service, or a rule check service.

3. The method according to claim 1 or 2, wherein the method further comprises:
presenting, by the extension subsystem, a registration interface to a user; receiving repository information configured by the user through the registration interface, wherein the repository information comprises at least a location of a code repository; and then sending a repository registration request to the hosting subsystem, wherein the repository registration request comprises the repository information; and
registering, by the hosting subsystem, the code repository based on the repository information in the repository registration request.

4. The method according to claim 3, wherein the code repository is located on an extension subsystem side, and sending, by the extension subsystem, the first code or the metadata of the first code to the hosting subsystem based on the first code upload request comprises:
storing, by the extension subsystem, the first code to the code repository based on the first code upload request, and sending the metadata of the first code to the hosting subsystem.

5. The method according to claim 4, wherein the method further comprises:
receiving, by the hosting subsystem, a second code upload request, wherein the second code upload request comprises second code;
indicating, by the hosting subsystem, the extension subsystem to store the second code in the code repository; and
sending, by the extension subsystem, metadata of the second code to the hosting subsystem.

6. The method according to claim 3, wherein the code repository comprises a primary repository located on a hosting subsystem side and an image repository located on the extension subsystem side, and sending, by the extension subsystem, the first code or the metadata of the first code to the hosting subsystem based on the first code upload request comprises:
sending, by the extension subsystem, the first code to the hosting subsystem based on the first code upload request; and
the method further comprises:
storing, by the hosting subsystem, the first code to the primary repository, and synchronizing the first code to the image repository.

7. The method according to claim 6, wherein the method further comprises:
receiving, by the hosting subsystem, a second code upload request, wherein the second code upload request comprises second code; and
storing, by the hosting subsystem, the second code in the primary repository, and synchronizing the second code to the image repository.

8. The method according to any one of claims 1 to 7, wherein the method further comprises:
receiving, by the extension subsystem, a code download request, wherein the code download request is for requesting to download third code; and
downloading, by the extension subsystem, the third code from the code repository on the extension subsystem side.

9. The method according to claim 8, wherein downloading, by the extension subsystem, the third code from the code repository on the extension subsystem side comprises:
when an authentication success notification of the hosting subsystem is received, downloading, by the extension subsystem, the third code from the code repository on the extension subsystem side; or
when the hosting subsystem is faulty, downloading, by the extension subsystem, the third code from the code repository on the extension subsystem side.

10. A code management system, wherein the system comprises:
an extension subsystem, configured to receive a first code upload request, wherein the first code upload request comprises first code; and
the extension subsystem is further configured to send the first code or metadata of the first code to the hosting subsystem based on the first code upload request; and
the hosting subsystem, configured to invoke a code processing service based on the first code or the metadata of the first code to process the first code.

11. The system according to claim 10, wherein the code processing service comprises one or more of a code association service, a project management service, a pipeline service, a security check service, or a rule check service.

12. The method according to claim 10 or 11, wherein the extension subsystem is further configured to:
present a registration interface to a user; receive repository information configured by the user through the registration interface, wherein the repository information comprises at least a location of a code repository; and then send a repository registration request to the hosting subsystem, wherein the repository registration request comprises the repository information; and
the hosting subsystem is further configured to:
register the code repository based on the repository information in the repository registration request.

13. The system according to claim 12, wherein the code repository is located on an extension subsystem side, and the extension subsystem is specifically configured to:
store the first code to the code repository based on the first code upload request, and send the metadata of the first code to the hosting subsystem.

14. The system according to claim 13, wherein the hosting subsystem is further configured to:
receive a second code upload request, wherein the second code upload request comprises second code; and indicate the extension subsystem to store the second code in the code repository; and
the extension subsystem is further configured to:
send metadata of the second code to the hosting subsystem.

15. The system according to claim 14, wherein the code repository comprises a primary repository located on a hosting subsystem side and an image repository located on the extension subsystem side, and the extension subsystem is specifically configured to:
send the first code to the hosting subsystem based on the first code upload request; and
the hosting subsystem is further configured to:
store the first code to the primary repository, and synchronize the first code to the image repository.

16. The system according to claim 15, wherein the hosting subsystem is further configured to:
receive the second code upload request, wherein the second code upload request comprises the second code; and
store the second code in the primary repository, and synchronize the second code to the image repository.

17. The system according to any one of claims 10 to 16, wherein the extension subsystem is further configured to:
receive a code download request, wherein the code download request is for requesting to download third code; and
download the third code from the code repository on the extension subsystem side.

18. The system according to claim 17, wherein the extension subsystem is specifically configured to:
when an authentication success notification of the hosting subsystem is received, download the third code from the code repository on the extension subsystem side; or
when the hosting subsystem is faulty, download the third code from the code repository on the extension subsystem side.

19. A computing device cluster, wherein the computing device cluster comprises at least one computing device, the at least one computing device comprises at least one processor and at least one memory, the at least one memory stores computer-readable instructions, and the at least one processor executes the computer-readable instructions, to enable the computing device cluster to perform the method according to any one of claims 1 to 9.

20. A computer-readable storage medium, comprising computer-readable instructions, wherein the computer-readable instructions are for implementing the method according to any one of claims 1 to 9.

21. A computer program product, comprising computer-readable instructions, wherein the computer-readable instructions are for implementing the method according to any one of claims 1 to 9.
